# EUROPÄISCHE PATENTANMELDUNG

(11) **EP 3 748 443 A1**
(43) Veröffentlichungstag der Anmeldung: **09.12.2020**
(21) Anmeldenummer: 20171193.4
(22) Anmeldetag: 23.04.2020
(51) Int. Cl.: G05B 19/401

(54) **VERFAHREN ZUM BETREIBEN EINES VIRTUELLEN SENSORS FÜR DAS BESTIMMEN EINES ZUSTANDS EINES WERKZEUGHALTERS EINER WERKZEUGMASCHINE, VIRTUELLER SENSOR FÜR DAS BESTIMMEN EINES ZUSTANDS EINER WERKZEUGMASCHINE SOWIE WERKZEUGMASCHINE**

(30) Priorität: 15.05.2019 DE 102019122775
(71) Anmelder: Point 8 GmbH, 44139 Dortmund (DE)
(72) Erfinder: Brambach, Tobias, 44319 Dortmund (DE); Dungs, Kevin, 44135 Dortmund (DE); Schneider, Sebastian, 44225 Dortmund (DE); Surmann, Julian, 59174 Kamen (DE); Brügge, Kai, 44787 Bochum (DE)
(74) Vertreter: Schorr, Peter Karl

(57) **Zusammenfassung**

Die Erfindung betrifft ein Verfahren zum Betreiben eines virtuellen Sensors (2) für das Bestimmen eines Zustands eines Werkzeughalters (4), wie Spindel, einer Werkzeugmaschine (6), die mindestens einen Werkzeughalter (4) und mindestens ein am Werkzeughalter (4) festlegbares oder festgelegtes Werkzeug (8) umfasst, durch das ein Werkstück (10) durch Ablaufen eines Maschinenprogramms bearbeitbar ist und die mindestens eine mindesten ein Sensormittel (16) umfassende Steuereinheit (12) aufweist.

## Beschreibung

Die Erfindung betrifft ein Verfahren zum Betreiben eines virtuellen Sensors für das Bestimmen eines Zustands eines Werkzeughalters einer Werkzeugmaschine, einen virtuellen Sensor für das Bestimmen eines Zustands eines Werkzeughalters sowie eine Werkzeugmaschine.

Beim Arbeiten mit Werkzeugmaschinen werden Werkstücke, auch Halbzeuge genannt, durch Werkzeuge von Werkzeugmaschinen spanabhebend bearbeitet. Die Werkzeuge sind hierbei in einem Werkzeughalter der Werkzeugmaschine, beispielsweise einer Spindel, eingespannt.

Die auf den Werkzeughalter, beispielsweise auf die Spindel, wirkenden Radialkräfte (Kräfte senkrecht zur Drehachse des Werkzeughalters) sind bei der Bearbeitung von Werkstücken von einer Vielzahl von Parametern abhängig. Die Einschränkung dieser Kräfte auf ein für die Werkzeugmaschine gut verträgliches, ist ein wesentliches Kriterium bei der Einstellung von Maschinenprogrammen zur Bearbeitung von Werkstücken. Ein dauerhaftes oder wiederholtes Überschreiten der festgelegten Grenzen für diese Radialkräfte kann zu einer Beschädigung oder Zerstörung des Werkzeughalters führen.

Bei den bekannten Werkzeugmaschinen ist ein direktes Messen der auf den Werkzeughalter wirkenden Kräfte umständlich, weshalb bei den bekannten Werkzeugmaschinen die auf den Werkzeughalter wirkenden Radialkräfte nicht für die Steuerung der Werkzeugmaschine herangezogen werden. Darüber hinaus sind Werkzeugmaschinen bekannt, bei denen durch das Verbauen zusätzlicher Sensorik ein direktes Erfassen der auf den Werkzeughalter wirkenden Kräfte ermöglicht ist.

Dieses erweist sich als umständlich und kostenintensiv.

Eine Aufgabe eines Ausführungsbeispiels der Erfindung ist, ein Verfahren zum Betreiben eines virtuellen Sensors, einen virtuellen Sensor, der durch ein derartiges Verfahren betreibbar ist sowie eine Werkzeugmaschine vorzuschlagen, durch das/durch den/bei der das Erfassen der auf den Werkzeughalter wirkenden Kräfte erleichtert ist.

Diese Aufgabe wird gelöst durch ein Verfahren zum Betreiben eines virtuellen Sensors für das Bestimmen eines Zustands eines Werkzeughalters einer Werkzeugmaschine, wie Spindel, einer Werkzeugmaschine, die mindestens einen Werkzeughalter und mindestens ein am Werkzeughalter festlegbares oder festgelegtes Werkzeug umfasst, durch das ein Werkstück durch Ablaufen eines Maschinenprogramms bearbeitbar ist und die mindestens eine mindestens ein Sensormittel umfassende Steuereinheit aufweist, mit den Schritten:
a. Erfassen mindestens eines, insbesondere zeitabhängigen, Körperdatums des Werkstücks, des Werkzeugs, des Werkzeughalters und/oder mindestens einer Antriebsachse, wie Material und/oder Geometrie;
b. Erfassen mindestens eines zeitabhängigen Raumdatums des Werkstücks, des Werkzeugs, des Werkzeughalters und/oder mindestens einer Antriebsachse, wie Position und/oder Orientierung relativ zu einem inertialen Koordinatenursprung der Werkzeugmaschine;
c. Erfassen mindestens eines zeitabhängigen Betriebsdatums, wie Vorschubgeschwindigkeit, Drehzahl oder Drehgeschwindigkeit des Werkzeughalters und/oder Erfassen mindestens einer, insbesondere ein Moment bildende, elektrische Stromstärke des Werkzeughalters und/oder der mindestens einen Antriebsachse;
d. Erfassen einer zeitabhängigen realen Gesamt-Energieaufnahme eines oder mehrerer Schritte des Maschinenprogramms durch das mindestens eine Sensormittel der Steuereinheit und Berechnen einer zeitabhängigen virtuellen Gesamt-Energieaufnahme des einen Schritts oder der mehreren Schritte durch eine virtuelle Simulation des Maschinenprogramms durch die Steuereinheit auf Grundlage der erfassten Körperdaten, Raumdaten und Betriebsdaten; und
e. Ermitteln oder Berechnen der am Werkzeughalter wirkenden Radialkräfte zumindest aus der Differenz von zeitabhängiger realer Gesamt-Energieaufnahme und zeitabhängiger virtueller Gesamt-Energieaufnahme durch die Steuereinheit.

Dadurch, dass die am Werkzeughalter wirkenden Radialkräfte aus der Differenz der realen Gesamt-Energieaufnahme und der virtuellen Gesamt-Energieaufnahme durch die Steuereinheit erfolgt, ist keine zusätzliche Sensorik an der Werkzeugmaschine vorzusehen. Hierdurch kann die Werkzeugmaschine kompakt und kostengünstig ausgebildet werden.

Die reale Gesamt-Energieaufnahme ist durch einfaches Erfassen, beispielsweise der benötigten realen elektrischen Leistung ermittelbar.

Unter "virtuell" wird verstanden, dass kein physisches Objekt oder Bauteil hierfür verwendet wird, sondern eine aufgrund bestehender Messsysteme und Echtzeitsimulation erfolgende Berechnung den virtuellen Sensor bildet.

Durch das erfindungsgemäße Verfahren kann zu jedem Zeitpunkt des Abarbeitens des Maschinenprogramms die an dem Werkzeughalter wirkenden Kräfte, insbesondere Radialkräfte, erfasst werden. Dieses kann beispielsweise bei einer Änderung des Maschinenprogramms erfolgen oder in Echtzeit.

Hohe Radialkräfte am Werkzeughalter entstehen, wenn der Werkzeughalter oder das am Werkzeughalter angeordnete Werkzeug gegen ein Hindernis, wie beispielsweise das Werkstück gefahren wird. Durch die Rotation des Werkzeugs wird bei einem gut eingestellten Maschinenprogramm das mit dem Werkzeug überlagernde Material des Werkstücks abgetragen, wobei die auf dem Werkzeughalter wirkenden Radialkräfte gering sind.

Bei einer Weiterbildung des Verfahrens erweist es sich daher als vorteilhaft, wenn die zeitabhängige virtuelle Gesamt-Energieaufnahme zumindest die Summe aus einer berechneten zeitabhängigen virtuellen Energieaufnahme eines Leerlaufs des Werkstückhalters, insbesondere ohne Werkstückbearbeitung, des einen oder der mehreren Schritte des Durchlaufs des Maschinenprogramms und aus einer zeitabhängigen virtuellen Energieaufnahme einer Werkstückbearbeitung des einen oder der mehreren Schritten des Durchlaufs des Maschinenprogramms umfasst.

Solchenfalls kann das Maschinenprogramm bei einem Leerlauf sowie bei einer Werkstückbearbeitung getrennt betrachtet werden.

Ferner ist bei einer Weiterbildung letztgenannten Verfahrens vorgesehen, dass die zeitabhängige virtuelle Energieaufnahme des Leerlaufs bei dem einen oder den mehreren Schritten des Durchlaufs des Maschinenprogramms aus einer benötigten mechanischen Energie der mindestens einen Antriebsachse im Leerlauf, insbesondere ohne Werkstückbearbeitung, oder aus mindestens einem Maschinenwirkungsgrad für die mechanische Energie ermittelbar ist und/oder dass die zeitabhängige virtuelle Energieaufnahme des Leerlaufs bei dem einen oder den mehreren Schritten des Durchlaufs des Maschinenprogramms aus einer mit der mechanischen Energie der mindestens einen Antriebsachse im Leerlauf korrespondierenden virtuellen Wärmelableitung ermittelbar ist.

Durch das Ermitteln der mechanischen Energie und der hierzu korrespondierenden Wärmeableitung, ist durch die Steuereinheit auf einfache Weise berechenbar, wie sich die Energieaufnahme bei der Umsetzung von mechanischer und thermischer Energie zumindest bei der Antriebsachse darstellt.

Erhöhte Radialkräfte treten insbesondere bei nicht optimal eingestellten Prozessparametern auf. Diese ergeben sich insbesondere aus einem ungünstigen Verhältnis zwischen Drehzahl und/oder Vorschubgeschwindigkeit des Werkzeugs, bzw. des Werkzeughalters und dem abgetragenen Materialvolumen des Werkstücks. Drehzahl und Vorschubgeschwindigkeit sind zu jedem Zeitpunkt an der Maschine mess-und einstellbar.

Bei bekannten Werkzeugmaschinen erfolgt ein Ermitteln des abgetragenen Materialvolumens des Werkstücks in der Regel nicht. Solchenfalls erweist es sich bei einer Weiterbildung des Verfahrens als vorteilhaft, wenn die zeitabhängige virtuelle-Energieaufnahme der Werkstückbearbeitung einen zeitabhängigen virtuellen Materialabtrag des Werkstücks bei dem einen oder den mehreren Schritten des Durchlaufs des Maschinenprogramms umfasst multipliziert mit einer hierfür erforderlichen virtuellen Energieaufnahme pro abgetragenem Volumen des Werkstücks.

Die für den Materialabtrag benötigte Energie ist proportional zum abgetragenen Volumen. Bei einer Weiterbildung des Verfahrens ist daher vorgesehen, dass der virtuelle Materialabtrag und die hierfür erforderliche virtuelle Energieaufnahme pro abgetragenes Volumen des Werkstücks in einem Speichermittel der Steuereinheit hinterlegbar, anpassbar und zum Berechnen der virtuellen Gesamt-Energieaufnahme abrufbar ist.

Solchenfalls kann das abgetragene Volumen und die hierfür benötigte Energieaufnahme pro abgetragenes Volumen im Speichermittel hinterlegt werden und durch die Steuereinheit geschätzt werden.

Ferner ist bei einer Weiterbildung letztgenannter Erfindungsgedanken vorgesehen, dass die im Speichermittel oder in der Steuereinheit hinterlegten Materialabträge und die hierfür erforderlichen virtuellen Energieaufnahmen pro abgetragenes Volumen einstellbar und individuell anpassbar sind. Hierdurch kann die Prognose von Durchlauf zu Durchlauf des Maschinenprogramms verbessert werden.

Ferner ist es bei einer Weiterbildung des Verfahrens vorgesehen, dass die zeitabhängige virtuelle Energieaufnahme der Werkstückbearbeitung zusätzlich eine Multiplikation mit einer Materialvariablen oder Materialkonstanten des Werkstücks umfasst.

Hierdurch kann das Ergebnis der berechneten virtuellen Gesamt-Energieaufnahme weiter verbessert werden. Durch die Materialkonstante können lineare Zusammenhänge einfach dargestellt werden. Durch die Materialvariablen können auch komplexe Zusammenhänge abgebildet werden.

Das Ergebnis lässt sich weiter verbessern, wenn das Berechnen der am Werkzeughalter wirkenden Radialkräfte aus zumindest der Differenz von zeitabhängiger realer Gesamt-Energieaufnahme und zeitabhängiger virtueller Gesamt-Energieaufnahme durch die Steuereinheit zusätzliche ein Kalibrieren durch einen maschinenspezifischen Kalibrierungsfaktor oder eine Kalibrierungsfunktion umfasst.

Durch den Kalibrierungsfaktor können linear Zusammenhänge einfach dargestellt werden. Durch die Kalibrierungsfunktion können auch komplexe Zusammenhänge abgebildet werden.

Solchenfalls kann das für Werkzeugmaschine allgemeingültige erfindungsgemäße Verfahren für jede einzelne Werkzeugmaschine individualisiert optimiert werden.

Es erweist sich als vorteilhaft, wenn das Erfassen zumindest der Körperdaten, Raumdaten und Betriebsdaten durch mindestens ein Sensormittel der Steuereinheit, ein manuelles Hinterlegen in der Steuereinheit, insbesondere im Speichermittel der Steuereinheit, und/oder ein automatisches Hinterlegen aus dem Maschinenprogramm umfasst.

Wenn das Erfassen zumindest der Körperdaten, Raumdaten und Betriebsdaten durch mindestens en Sensormittel erfolgt, ist das Verfahren vollständig automatisierbar durchführbar. Wenn das Erfassen zumindest der Körperdaten, Raumdaten und Betriebsdaten ein manuelles Hinterlegen in der Steuereinheit umfasst, kann auf zusätzliche Sensorik verzichtet werden. Wenn das Erfassen zumindest der Körperdaten, Raumdaten und Betriebsdaten ein automatisches Hinterlegen aus dem Maschinenprogramm umfasst, kann das Verfahren schnell an der Werkzeugmaschine eingerichtet und durchgeführt werden.

Um die virtuelle Gesamt-Energieaufnahme verbessert berechnen zu können, ist bei einer Weiterbildung des Verfahrens ein Annähern der Geometrie der erfassten Körperdaten des Werkzeug und/oder des Werkzeughalters durch eine virtuelle Hilfsgeometrie aus einer Anzahl von N Hilfselementen und/oder ein Annähern der Geometrie des Werkstücks durch eine Punktwolke in einem kartesischen Koordinatensystem vorgesehen, deren einzelne Punkte regelmäßig zueinander beabstandet sind und insbesondere ein regelmäßiges oder unregelmäßiges Gitter bilden.

Die Verwendung eines regelmäßigen Gitters erleichtert eine Nachbearbeitung der Daten. Ferner ist es denkbar, dass die einzelnen Punkte ein unregelmäßiges Gitter bilden. Solchenfalls ist eine Verfeinerung des Verfahrens ermöglicht, durch die insbesondere eine Berücksichtigung der stochastischen Materialeigenschaften ermöglicht ist.

Hierdurch ist die reale Geometrie der Körperdaten von Werkzeug, Werkzeughalter und Werkstück auf einfache Weise in eine virtuelle Umgebung übertragbar.

Die Hilfselemente können zum Beispiel durch Kugeln angenähert werden, um auf performante Algorithmen zurückgreifen zu können, durch die die Schnittmenge der vereinfachten Werkzeuggeometrien und der Werkstückgeometrien berechenbar ist.

Der Abstand der Punkte der virtuellen Punktwolke des so dargestellten Werkstücks, bildet das kleinstmögliche Einheitsvolumen des Werkstücks, das bei einer Bearbeitung des Werkstücks durch das Werkzeug mittels Materialabnahme entfernbar ist. Bei einer Weiterbildung letztgenannten Verfahrens ist vorgesehen, dass der Zeitabstand zum Erfassen der Körperdaten, Raumdaten und Betriebsdaten kleiner oder gleich ist dem Abstand zweier Punkte der als virtuelle Punktwolke angenäherten Geometrie des Werkstücks dividiert durch die Vorschubgeschwindigkeit des Werkzeugs und/oder des Werkzeughalters und/oder dass eine Zeitspanne eines Schritts der virtuellen Simulation des Maschinenprogramms den Zeitabstand umfasst.

Hierdurch sind auf einfache Weise ein Zeitabstand sowie eine Zeitspanne eines Schritts der virtuellen Simulation des Maschinenprogramms bestimmbar, bei dem/der das Verfahren optimale Ergebnisse liefert. Solchenfalls sind die einzelnen eingangs genannten Verfahrensschritte, insbesondere die Schritte a. bis e. wiederholt im zeitlichen Abstand des Zeitabstands durchführbar.

Um die virtuelle Umgebung beim Berechnen der virtuellen Simulation des Maschinenprogramms aktuell zu halten, erweist es sich als vorteilhaft, wenn der zeitabhängige virtuelle Materialabtrag des Werkstücks in der virtuellen Simulation alle die Punkte der virtuellen Punktwolke des Werkstücks umfasst, die in der Zeitspanne mit den die virtuellen Hilfsgeometrie bildenden Hilfselementen des Werkzeugs überlappen und wenn die Virtuelle Geometrie des Werkstücks durch Entfernen der um die mit den Hilfselementen des Werkzeugs überlappenden Punkte der virtuellen Punktwolke angepasst wird.

Solchenfalls werden die eingangs erfassten Körperdaten, zumindest des Werkstücks virtuell angepasst.

Ferner wird die Aufgabe gelöst durch einen virtuellen Sensor für das Bestimmen eines Zustands eines Werkzeughalters, wie Spindel, einer Werkzeugmaschine, der durch ein Verfahren mit mindestens einem der zuvor genannten Merkmale und Arbeitsschritten betreibbar ist, mit mindestens einem Werkzeughalter, mit mindestens einem am Werkzeughalter festlegbaren oder festgelegten Werkzeug, durch das ein Werkstück durch Ablaufen eines Maschinenprogramms bearbeitbar ist, und mit mindestens einer mindestens ein Sensormittel umfassenden Steuereinheit durch die eine zeitabhängige reale Gesamt-Energieaufnahme erfassbar und eine zeitabhängige virtuelle Gesamt- Energieaufnahme berechenbar ist, wobei die auf den Werkzeughalter wirkenden Radialkräfte zumindest aus der Differenz von realer Gesamt- Energieaufnahme und zeitabhängiger virtueller Gesamt-Energieaufnahme durch die Steuereinheit berechenbar ist.

Schließlich wird die Aufgabe gelöst durch eine Werkzeugmaschine, die mindestens einen virtuellen Sensor mit mindestens einem der zuvor genannten Merkmale umfasst und/oder die durch ein Verfahren mit mindestens einem der zuvor genannten Merkmale oder Schritte betreibbar ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Verfahrens.

In der Zeichnung zeigt:
- Figur 1: Eine schematische Seitenansicht auf einen virtuellen Sensor einer Werkzeugmaschine;
- Figur 2: Ein schematisches Ablaufdiagramm eines erfindungsgemäßen Verfahrens.

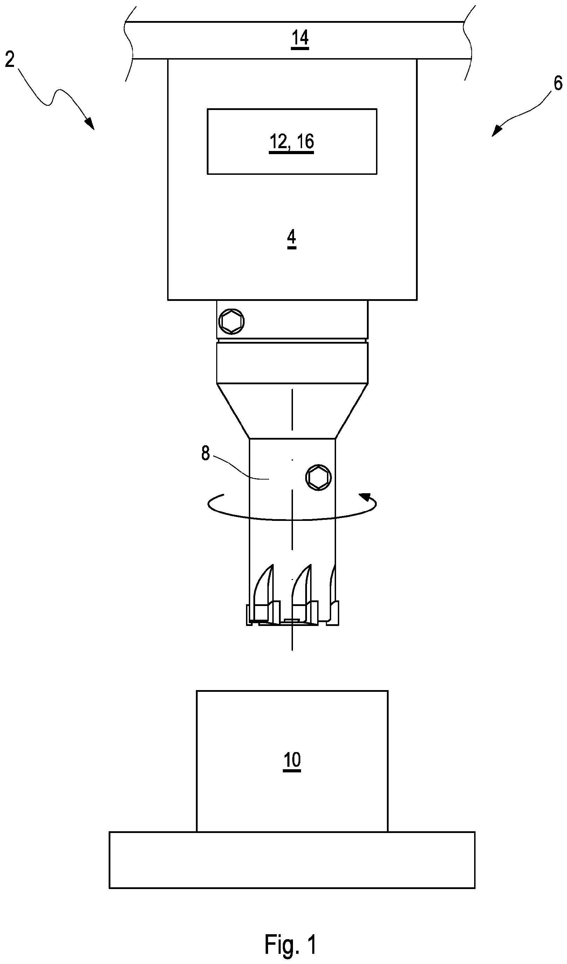

Figur 1 zeigt eine schematische Seitenansicht auf einen insgesamt mit dem Bezugszeichen 2 versehenen virtuellen Sensor. Dieser dient dazu, den Zustand eines Werkzeughalters 4, wie Spindel, einer Werkzeugmaschine 6 (in der Figur 1 nur bereichsweise dargestellt) zu bestimmen. Die Werkzeugmaschine 6 umfasst neben dem Werkzeughalter 4 ein Werkzeug 8, durch das ein Werkstück 10 durch Ablaufen eines in einer Steuereinheit 12 hinterlegten Maschinenprogramms bearbeitbar ist. Darüber hinaus umfasst die Werkzeugmaschine 6 mindestens ein Sensormittel 16, durch das eine zeitabhängige reale Gesamt-Energieaufnahme durch den virtuellen Sensor 2 erfassbar und durch eine zeitabhängige virtuelle Gesamt-Energieaufnahme berechenbar ist.

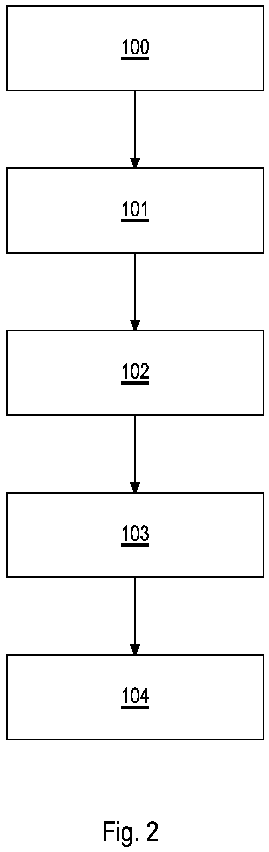

Figur 2 zeigt ein schematisches Ablaufdiagramm. Unter Verweis auf die in Figur 1 dargestellten Komponenten der Werkzeugmaschine 6 wird nachfolgend das Verfahren zum Betreiben eines virtuellen Sensors 2 für das Bestimmen eines Zustands eines Werkzeughalters 4 einer Werkzeugmaschine 6 beschrieben. An der Werkzeugmaschine 6 ist ein Maschinenprogram ablaufbar. Hierbei umfasst das Verfahren einen ersten Schritt 100, bei dem ein insbesondere zeitabhängiges Körperdatum des Werkstücks 10, des Werkzeugs 8, des Werkzeughalters 4 und/oder mindestens einer Antriebsachse 14 erfassbar ist. Das Körperdatum kann beispielsweise ein Material und/oder eine Geometrie umfassen. Insbesondere kann im Schritt 100 die Geometrie der erfassten Körperdaten des Werkzeugs 8 und/oder des Werkzeughalters 4 durch eine virtuelle Hilfsgeometrie aus einer Anzahl von N Hilfselementen angenähert werden und/oder die Geometrie des Werkstücks 10 durch eine virtuelle Punktwolke in einem kartesischen Koordinatensystem, deren einzelne Punkte regelmäßig zueinander beabstandet sind und insbesondere ein regelmäßiges Gitter bilden, angenähert werden.

In einem hieran anschließenden Schritt 101 werden die zeitabhängigen Raumdaten des Werkstücks 10, des Werkzeugs 8, des Werkzeughalters 4 und/oder mindestens einer Antriebsachse 14 erfasst. Die Raumdaten können beispielsweise eine Position und/oder eine Orientierung relativ zu einem initialen Koordinatenursprung der Werkzeugmaschine umfassen.

In einem hieran anschließenden Schritt 102 ist mindestens ein zeitabhängiges Betriebsdatum, wie Vorschubgeschwindigkeit, Drehzahl oder Drehgeschwindigkeit des Werkzeughalters 4 erfassbar und/oder mindestens eine, insbesondere ein Moment bildende, elektrische Stromstärke des Werkzeughalters 4 und/oder der mindestens einen Antriebsachse 14 erfassbar. Durch das Erfassen der Vorschubgeschwindigkeit kann beispielsweise im Schritt 102 zusätzlich ein Zeitabstand erfasst werden, innerhalb dessen die in dem Verfahren durchzuführenden Verfahrensschritte wiederholt durchzuführen sind. Der Zeitabstand wird derart berechnet, dass der Abstand zweier Punkte, der als virtuelle Punktwolke angenäherten Geometrie des Werkstücks 10, dividiert durch die Vorschubgeschwindigkeit des Werkzeugs 8 und/oder des Werkzeughalters 6 umfasst. Hierdurch ist die Genauigkeit des Verfahrens verbesserbar.

Darüber hinaus ist in einem weiteren Schritt 103 eine reale Gesamt-Energieaufnahme eines oder mehrerer Schritte des Maschinenprogramms durch das mindestens eine Sensormittel 16 der Steuereinheit 12 erfassbar und eine zeitabhängige, virtuelle Gesamt-Energieaufnahme des einen Schritts oder der mehreren Schritte durch eine virtuelle Simulation des Maschinenprogramms durch die Steuereinheit 12 auf Grundlage der erfassten Körperdaten, Raumdaten und Betriebsdaten berechenbar. Neben den berechneten und erfassten Daten kann beispielsweise ein Kalibrieren mittels eines maschinenspezifischen Kalibrierungsfaktors und/oder eine Multiplikation der für die Werkstückbearbeitung berechneten virtuellen zeitabhängigen Energieaufnahme mittels einer Materialkonstanten oder einer Materialvariablen optimiert werden.

In einem hieran anschließenden Schritt 104 sind die am Werkzeughalter 4 wirkenden Radialkräfte zumindest aus der Differenz von zeitabhängiger realer Gesamt-Energieaufnahme und zeitabhängiger virtueller Gesamt-Energieaufnahme durch die Steuereinheit 12 ermittelbar oder berechenbar.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: virtueller Sensor
- 4: Werkzeughalter
- 6: Werkzeugmaschine
- 8: Werkzeug
- 10: Werkstück
- 12: Steuereinheit
- 14: Antriebsachse
- 16: Sensormittel

- 100-104: Verfahrensschritte

## Patentansprüche

1. Verfahren zum Betreiben eines virtuellen Sensors (2) für das Bestimmen eines Zustands eines Werkzeughalters (4) einer Werkzeugmaschine (6), wie Spindel, einer Werkzeugmaschine (6), die mindestens einen Werkzeughalter (4) und mindestens ein am Werkzeughalter (4) festlegbares oder festgelegtes Werkzeug (8) umfasst, durch das ein Werkstück (10) durch Ablaufen eines Maschinenprogramms bearbeitbar ist und die mindestens eine mindesten ein Sensormittel (16) umfassende Steuereinheit (12) aufweist, mit den Schritten:
a. Erfassen mindestens eines, insbesondere zeitabhängigen, Körperdatums des Werkstücks (10), des Werkzeugs (8), des Werkzeughalters (4) und/oder mindestens einer Antriebsachse (14), wie Material und/oder Geometrie;
b. Erfassen mindestens eines zeitabhängigen Raumdatums des Werkstücks (10), des Werkzeugs (8), des Werkzeughalters (4) und/oder mindestens einer Antriebsachse (14), wie Position und/oder Orientierung relativ zu einem inertialen Koordinatenursprung der Werkzeugmaschine (6);
c. Erfassen mindestens eines zeitabhängigen Betriebsdatums, wie Vorschubgeschwindigkeit, Drehzahl oder Drehgeschwindigkeit des Werkzeughalters (4) und/oder Erfassen mindestens einer, insbesondere ein Moment bildende, elektrische Stromstärke des Werkzeughalters (4) und/oder der mindestens einenAntriebsachse (14);
d. Erfassen einer zeitabhängigen realen Gesamt-Energieaufnahme eines oder mehrerer Schritte des Maschinenprogramms durch das mindestens eine Sensormittel (16) der Steuereinheit (12) und Berechnen einer zeitabhängigen virtuellen Gesamt-Energieaufnahme des einen Schritts oder der mehreren Schritte durch eine virtuelle Simulation des Maschinenprogramms durch die Steuereinheit (12) auf Grundlage der erfassten Körperdaten, Raumdaten und Betriebsdaten; und
e. Ermitteln oder Berechnen der am Werkzeughalter (4) wirkenden Radialkräfte zumindest aus der Differenz von zeitabhängiger realer Gesamt-Energieaufnahme und zeitabhängiger virtueller Gesamt-Energieaufnahme durch die Steuereinheit (12).

2. Verfahren nach Anspruch 1, **dadurch gekennzeichnet, dass** die zeitabhängige virtuelle Gesamt-Energieaufnahme zumindest die Summe aus einer berechneten zeitabhängigen virtuellen Energieaufnahme eines Leerlaufs des Werkstückhalters, insbesondere ohne Werkstückbearbeitung, des einen oder der mehreren Schritte des Durchlaufs des Maschinenprogramms und aus einer zeitabhängigen virtuellen Energieaufnahme einer Werkstückbearbeitung des einen oder der mehreren Schritten des Durchlaufs des Maschinenprogramms umfasst.

3. Verfahren nach Anspruch 2, **dadurch gekennzeichnet, dass** die zeitabhängige virtuelle Energieaufnahme des Leerlaufs bei dem einen oder den mehreren Schritten des Durchlaufs des Maschinenprogramms aus einer benötigten mechanischen Energie der mindestens einen Antriebsachse (14) im Leerlauf, insbesondere ohne Werkstückbearbeitung, oder aus mindestens einem Maschinenwirkungsgrad für die mechanische Energie ermittelbar ist und/oder dass die zeitabhängige virtuelle Energieaufnahme des Leerlaufs bei dem einen oder den mehreren Schritten des Durchlaufs des Maschinenprogramms aus einer mit der mechanischen Energie der mindestens einen Antriebsachse (14) im Leerlauf korrespondierenden virtuellen Wärmelableitung ermittelbar ist.

4. Verfahren nach Anspruch 2 oder 3, **dadurch gekennzeichnet, dass** die zeitabhängige virtuelle-Energieaufnahme der Werkstückbearbeitung einen zeitabhängigen virtuellen Materialabtrag des Werkstücks (10) bei dem einen oder den mehreren Schritten des Durchlaufs des Maschinenprogramms umfasst multipliziert mit einer hierfür erforderlichen virtuellen Energieaufnahme pro abgetragenem Volumen des Werkstücks (10).

5. Verfahren nach Anspruch 4, **dadurch gekennzeichnet, dass** der virtuelle Materialabtrag und die hierfür erforderliche virtuelle Energieaufnahme pro abgetragenes Volumen des Werkstücks (10) in einem Speichermittel der Steuereinheit (12) hinterlegbar, anpassbar und zum Berechnen der virtuellen Gesamt-Energieaufnahme abrufbar ist.

6. Verfahren nach Anspruch 4 oder 5, **dadurch gekennzeichnet, dass** die zeitabhängige virtuelle Energieaufnahme der Werkstückbearbeitung zusätzlich eine Multiplikation mit einer Materialvariablen oder Materialkonstanten des Werkstücks (10) umfasst.

7. Verfahren nach mindestens einem der vorhergehenden Ansprüche,
**dadurch gekennzeichnet, dass** das Berechnen der am Werkzeughalter (4) wirkenden Radialkräfte aus zumindest der Differenz von zeitabhängiger realer Gesamt-Energieaufnahme und zeitabhängiger virtueller Gesamt-Energieaufnahme durch die Steuereinheit (12) zusätzliche ein Kalibrieren durch einen maschinenspezifischen Kalibrierungsfaktor oder eine Kalibrierungsfunktion umfasst.

8. Verfahren nach mindestens einem der vorhergehenden Ansprüche,
**dadurch gekennzeichnet, dass** das Erfassen zumindest der Körperdaten, Raumdaten und Betriebsdaten durch mindestens ein Sensormittel (16) der Steuereinheit (12), ein manuelles Hinterlegen in der Steuereinheit (12), insbesondere im Speichermittel der Steuereinheit (12), und/oder ein automatisches Hinterlegen aus dem Maschinenprogramm umfasst.

9. Verfahren nach mindestens einem der vorhergehenden Ansprüche,
**gekennzeichnet durch** ein Annähern der Geometrie der erfassten Körperdaten des Werkzeugs (8) und/oder des Werkzeughalters (4) durch eine virtuelle Hilfsgeometrie aus einer Anzahl von N Hilfselementen und/oder durch Annähern der Geometrie des Werkstücks (10) durch eine virtuelle Punktwolke in einem kartesischen Koordinatensystem, deren einzelne Punkte regelmäßig zueinander beabstandet sind und insbesondere ein regelmäßiges oder unregelmäßiges Gitter bilden.

10. Verfahren nach Anspruch 9, **dadurch gekennzeichnet, dass** der Zeitabstand zum Erfassen der Körperdaten, Raumdaten und Betriebsdaten kleiner oder gleich ist dem Abstand zweier Punkte der als virtuelle Punktwolke angenäherten Geometrie des Werkstücks (10) dividiert durch die Vorschubgeschwindigkeit des Werkzeugs (8) und/oder des Werkzeughalters (4) und/oder dass eine Zeitspanne eines Schritts der virtuellen Simulation des Maschinenprogramms den Zeitabstand umfasst.

11. Verfahren nach Anspruch 9 oder 10, **dadurch gekennzeichnet, dass** der zeitabhängige virtuelle Materialabtrag des Werkstücks (10) in der virtuellen Simulation alle die Punkte der virtuellen Punktwolke des Werkstücks (10) umfasst, die in der Zeitspanne mit den die virtuellen Hilfsgeometrie bildenden Hilfselementen des Werkzeugs (8) überlappen und dass die Virtuelle Geometrie des Werkstücks (10) durch Entfernen der um die mit den Hilfselementen des Werkzeugs (8) überlappenden Punkte der virtuellen Punktwolke angepasst wird.

12. Virtueller Sensor (2) für das Bestimmen eines Zustands eines Werkzeughalters (4), wie Spindel, einer Werkzeugmaschine (6), der durch ein Verfahren nach einem der Ansprüche 1 bis 11 betreibbar ist, mit mindestens einem Werkzeughalter (4), mit mindestens einem am Werkzeughalter (4) festlegbaren oder festgelegten Werkzeug (8), durch das ein Werkstück (10) durch Ablaufen eines Maschinenprogramms bearbeitbar ist, und mit mindestens einer mindestens ein Sensormittel (16) umfassenden Steuereinheit (12) durch die eine zeitabhängige reale Gesamt-Energieaufnahme erfassbar und eine zeitabhängige virtuelle Gesamt-Energieaufnahme berechenbar ist, wobei die auf den Werkzeughalter (4) wirkenden Radialkräfte zumindest aus der Differenz von realer Gesamt-Energieaufnahme und zeitabhängiger virtueller Gesamt-Energieaufnahme durch die Steuereinheit (12) berechenbar ist.

13. Werkzeugmaschine (6), die mindestens einen virtuellen Sensor (2) nach Anspruch 12 umfasst und/oder die durch ein Verfahren nach einem der Ansprüche 1 bis 11 betreibbar ist.
